# EUROPEAN PATENT APPLICATION

(11) **EP 4 797 023 A1**
(43) Date of publication of application: **26.08.2026**
(21) Application number: 24881709.0
(22) Date of filing: 24.10.2024
(51) Int. Cl.: G05D 1/00

(54) **TARGET VEHICLE POSITION CORRECTION METHOD AND APPARATUS, DEVICE AND MEDIUM**

(30) Priority: 25.10.2023 CN 202311397138
(71) Applicant: ZHEJIANG ZEEKR INTELLIGENT TECHNOLOGY CO., LTD., Ningbo, Zhejiang 315899 (CN); Zhejiang Geely Holding Group Co., Ltd., Hangzhou, Zhejiang 310051 (CN)
(72) Inventor: WANG, Jingtao, Ningbo, Zhejiang 315899 (CN)
(74) Representative: Boult Wade Tennant LLP
(86) International application number: PCT/CN2024/127168
(87) International publication number: WO 2025/087348

(57) **Abstract**

The present application discloses a method for target vehicle position correction, an apparatus, a device and a medium. By acquiring position state parameters of a target vehicle at a first moment and a second moment, a target optimization parameter used for calculating a target heading angle and a target position parameter is determined, and the target heading angle and the target position parameter are further determined. A moving path and a target position of the target vehicle at a current moment can be corrected according to the target heading angle and the target position parameter to obtain corrected position information of the target vehicle. In a process of target vehicle position correction, three types of information, namely velocity information, heading information and heading change information, are applied, thereby improving the effectiveness and accuracy of target vehicle position correction. In addition, in the process of position correction, parameters outputted by a filter are collected only when acquiring the position state parameters, without interfering with internal parameters of the filter, thus simplifying the calculation process and improving the real-time performance of vehicle position correction.

## Description

The present application claims the priority of Chinese Patent Application No. 202311397138.5, entitled "TARGET VEHICLE POSITION CORRECTION METHOD AND APPARATUS, DEVICE AND MEDIUM" and filed to China National Intellectual Property Administration on October 25, 2023, which is incorporated in the present application by reference in its entirety. English specification (word by word)

### TECHNICAL FIELD

Embodiments of the present application relate to, but are not limited to, autonomous driving technologies, and in particular, to a target vehicle position correction method, an apparatus, a device and a medium.

### BACKGROUND

In the field of autonomous driving, vehicles perform adaptive switching operations of speed and position based on data related to surrounding environment acquired by multiple sensors. In a multi-sensor fusion positioning solution based on cameras, millimeter-wave radars and laser radars and the like, data loss in some areas may occur due to the impact of environment or vehicle jolting on some sensors. At this time, the fusion process will be directly affected by data from some sensors or a single sensor, thereby causing an abnormality in a lateral position detected by the vehicle. This lateral position abnormality is easily misinterpreted as acceleration caused by lane change of a preceding vehicle or as subsequent hard braking caused by the merging of an adjacent vehicle, or may cause autonomous driving functions to disengage and manual takeover.

For current vehicle position correction methods, data collected by various sensors is usually filtered, and then data optimization is performed directly within a filter to obtain a position correction result. These methods have problems of complex models and large system delay, ultimately leading to poor real-time performance of vehicle position correction and insufficient accuracy of vehicle position correction within a preset reaction duration. Therefore, there is an urgent need for a target vehicle position correction method to improve the real-time performance of vehicle position correction and the accuracy of vehicle position determination.

### SUMMARY

The following is an overview of the subject matters described in detail herein. This SUMMARY is not intended to limit the protection scope of the claims.

The present application provides a method for target vehicle position correction, an apparatus, a device and a medium.

In a first aspect, the present application provides a method for target vehicle position correction, including:
acquiring a first position state parameter of a target vehicle at a first moment, and acquiring a second position state parameter of the target vehicle at a second moment;
where the second moment is after the first moment;
determining a target optimization parameter according to the first position state parameter and the second position state parameter;
where the target optimization parameter is used to calculate and obtain a target heading angle and a target position parameter;
determining the target heading angle according to the target optimization parameter;
determining the target position parameter according to the target optimization parameter and the target heading angle;
correcting a moving path and a target position of the target vehicle at a current moment according to the target heading angle and the target position parameter to obtain corrected position information of the target vehicle, where the current moment is after the second moment.

As an optional implementation, after correcting the moving path and the target position of the target vehicle at the current moment according to the target heading angle and the target position parameter to obtain the corrected position information of the target vehicle, the method further includes:
controlling the target vehicle to move to the target position indicated by the corrected position information of the target vehicle according to the corrected position information of the target vehicle;
updating a moment at which the target vehicle moves to the target position to the first moment, and triggering execution of the steps of acquiring the first position state parameter of the target vehicle at the first moment and acquiring the second position state parameter of the target vehicle at the second moment.

As an optional implementation, the first position state parameter includes a first lateral velocity, a first longitudinal velocity, a first initial heading angle, an angular velocity, a first moment value, a first lateral position and a first longitudinal position;
the second position state parameter includes a second lateral velocity, a second longitudinal velocity, a second initial heading angle, a second moment value, a second lateral position and a second longitudinal position;
where determining the target optimization parameter according to the first position state parameter and the second position state parameter includes:
   determining a lateral displacement value and a longitudinal displacement value according to the first lateral position, the first longitudinal position, the second lateral position and the second longitudinal position, and determining a displacement magnitude according to the lateral displacement value and the longitudinal displacement value;
   determining a first velocity magnitude according to the first lateral velocity and the first longitudinal velocity;
   determining a second velocity magnitude according to the second lateral velocity and the second longitudinal velocity;
   determining the displacement magnitude, the first velocity magnitude, the second velocity magnitude, the angular velocity, the first moment value, the second moment value, the first initial heading angle and the second initial heading angle as the target optimization parameter.

As an optional implementation, determining the target heading angle according to the target optimization parameter includes:
calculating and obtaining the target heading angle according to the first velocity magnitude, the second velocity magnitude, the angular velocity, the first moment value, the second moment value and the first initial heading angle;
where the target position parameter includes a target lateral position parameter and a target longitudinal position parameter, and determining the target position parameter according to the target optimization parameter and the target heading angle includes:
   determining a first weight, a second weight and a third weight, where a sum of the first weight, the second weight and the third weight is a first value;
   determining a constrain optimization equation according to the first weight, the second weight, the third weight, the displacement magnitude, the second initial heading angle and the target heading angle;
   determining the target lateral position parameter and the target longitudinal position parameter according to the constrain optimization equation.

As an optional implementation, the method further includes:
determining an attenuation coefficient;
correcting the target lateral position parameter and the target longitudinal position parameter according to the attenuation coefficient and the constrain optimization equation.

In a second aspect, the present application provides a target vehicle position correction apparatus, and the apparatus includes:
an acquisition module, configured to acquire a first position state parameter of a target vehicle at a first moment, and acquire a second position state parameter of the target vehicle at a second moment;
where the second moment is after the first moment;
a processing module, configured to determine a target optimization parameter according to the first position state parameter and the second position state parameter;
where the target optimization parameter is used to calculate and obtain a target heading angle and a target position parameter;
where the processing module is further configured to determine the target heading angle according to the target optimization parameter;
the processing module is further configured to determine the target position parameter according to the target optimization parameter and the target heading angle;
the processing module is further configured to correct a moving path and a target position of the target vehicle at a current moment according to the target heading angle and the target position parameter to obtain corrected position information of the target vehicle, where the current moment is after the second moment.

As an optional implementation, after correcting the moving path and the target position of the target vehicle at the current moment according to the target heading angle and the target position parameter to obtain the corrected position information of the target vehicle, the processing module is further configured to: control the target vehicle to move to the target position indicated by the corrected position information of the target vehicle according to the corrected position information of the target vehicle;
update a moment at which the target vehicle moves to the target position to the first moment, and trigger execution of the steps of acquiring the first position state parameter of the target vehicle at the first moment and acquiring the second position state parameter of the target vehicle at the second moment.

As an optional implementation, the first position state parameter includes a first lateral velocity, a first longitudinal velocity, a first initial heading angle, an angular velocity, a first moment value, a first lateral position and a first longitudinal position;
the second position state parameter includes a second lateral velocity, a second longitudinal velocity, a second initial heading angle, a second moment value, a second lateral position and a second longitudinal position; and
where the processing module is further configured to determine a lateral displacement value and a longitudinal displacement value according to the first lateral position, the first longitudinal position, the second lateral position and the second longitudinal position, and determine a displacement magnitude according to the lateral displacement value and the longitudinal displacement value;
determine a first velocity magnitude according to the first lateral velocity and the first longitudinal velocity;
determine a second velocity magnitude according to the second lateral velocity and the second longitudinal velocity;
determine the displacement magnitude, the first velocity magnitude, the second velocity magnitude, the angular velocity, the first moment value, the second moment value, the first initial heading angle and the second initial heading angle as the target optimization parameter.

As an optional implementation, the processing module is further configured to:
calculate and obtaining the target heading angle according to the first velocity magnitude, the second velocity magnitude, the angular velocity, the first moment value, the second moment value and the first initial heading angle; and
where the target position parameter includes a target lateral position parameter and a target longitudinal position parameter, and a specific manner of the processing module to determine the target position parameter according to the target optimization parameter and the target heading angle includes:
   determining a first weight, a second weight and a third weight, where a sum of the first weight, the second weight and the third weight is a first value;
   determining a constrain optimization equation according to the first weight, the second weight, the third weight, the displacement magnitude, the second initial heading angle and the target heading angle;
   determining the target lateral position parameter and the target longitudinal position parameter according to the constrain optimization equation.

As an optional implementation, the processing module is further configured to:
determine an attenuation coefficient;
correct the target lateral position parameter and the target longitudinal position parameter according to the attenuation coefficient and the constrain optimization equation.

In a third aspect, the present application further provides an electronic device, including:
at least one processor; and
a memory communicatively connected to the at least one processor;
where the memory stores instructions executable by the at least one processor, and the instructions are executed by the at least one processor to enable the at least one processor to perform the method according to the first aspect.

In a fourth aspect, the present application further provides a computer-readable storage medium, where computer-executable instructions are stored in the computer-readable storage medium, and the computer-executable instructions, when executed by a processor, are used to implement the method according to the first aspect.

In a fifth aspect, the present application provides a computer program, where when the computer program runs on a computer, the computer executes the method described in the first aspect.

In the method for target vehicle position correction, the apparatus, the device and the medium provided by the present application, by acquiring position state parameters of the target vehicle at the first moment and the second moment, the target optimization parameter used for calculating the target heading angle and the target position parameter is determined, and the target heading angle and the target position parameter are further determined. The moving path and the target position of the target vehicle at the current moment can be corrected according to the target heading angle and the target position parameter to obtain the corrected position information of the target vehicle. In the process of target vehicle position correction, three types of information, namely velocity information, heading information and heading change information, is applied, thereby improving the effectiveness and accuracy of target vehicle position correction. In addition, in the position correction process, parameters outputted by a filter are collected only when acquiring the position state parameters, without interfering with internal parameters of the filter, thus simplifying the calculation process and improving the real-time performance of vehicle position correction.

Other aspects will become apparent after reading and understanding the accompanying drawings and detailed description.

### BRIEF DESCRIPTION OF DRAWINGS

The accompanying drawings are incorporated in and constitute a part of the specification, which illustrate embodiments consistent with the present application and serve to explain the principles of the present application together with the description.
FIG. 1 is a schematic diagram of an application scenario of a target vehicle position correction method disclosed in an embodiment of the present application;
FIG. 2 is a schematic flowchart of a target vehicle position correction method disclosed in an embodiment of the present application;
FIG. 3 is a schematic flowchart of another target vehicle position correction method disclosed in an embodiment of the present application;
FIG. 4 is a schematic diagram of the effect of a target vehicle position correction method disclosed in an embodiment of the present application;
FIG. 5 is a schematic diagram of the effect of another target vehicle position correction method disclosed in an embodiment of the present application;
FIG. 6 is a structural schematic diagram of a target vehicle position correction apparatus disclosed in an embodiment of the present application;
FIG. 7 is a structural schematic diagram of an electronic device for target vehicle position correction disclosed in an embodiment of the present application.

Through the above accompanying drawings, clear embodiments of the present application have been shown and will be described in more detail hereinafter. These accompanying drawings and written descriptions are not intended to limit the scope of the concept of the present application in any way, but rather to explain the concept of the present application to those skilled in the art by referring to specific embodiments.

### DESCRIPTION OF EMBODIMENTS

Exemplary embodiments are described in detail here, examples of which are illustrated in the accompanying drawings. When the following description refers to the accompanying drawings, the same numerals in different accompanying drawings indicate the same or similar elements unless otherwise indicated. The implementations described in the following exemplary embodiments do not represent all implementations consistent with the present application. Rather, they are merely examples of apparatuses and methods consistent with some aspects of the present application as detailed in the appended claims.

In the field of autonomous driving, vehicles perform adaptive switching operations of speed and position based on data related to surrounding environment acquired by multiple sensors. In a multi-sensor fusion positioning solution based on cameras, millimeter-wave radars and laser radars and the like, data loss in some areas may occur due to the impact of environment or vehicle jolting on some sensors. At this time, the fusion process will be directly affected by data from some sensors or a single sensor, thereby causing an abnormality in a lateral position detected by the vehicle. This lateral position abnormality is easily misinterpreted as acceleration caused by lane change of a preceding vehicle or as subsequent hard braking caused by the merging of an adjacent vehicle, or may cause autonomous driving functions to disengage and manual takeover.

For current vehicle position correction methods, data collected by various sensors is usually filtered, and then data optimization is performed directly within a filter to obtain a position correction result. These methods require intervening in a state of the filter, and the amount of data processed is large, leading to problems of complex models and large system delay, ultimately leading to poor real-time performance of vehicle position correction and insufficient accuracy of vehicle position correction within a preset reaction duration. Therefore, there is an urgent need for a target vehicle position correction method to improve the real-time performance of vehicle position correction and the accuracy of vehicle position determination.

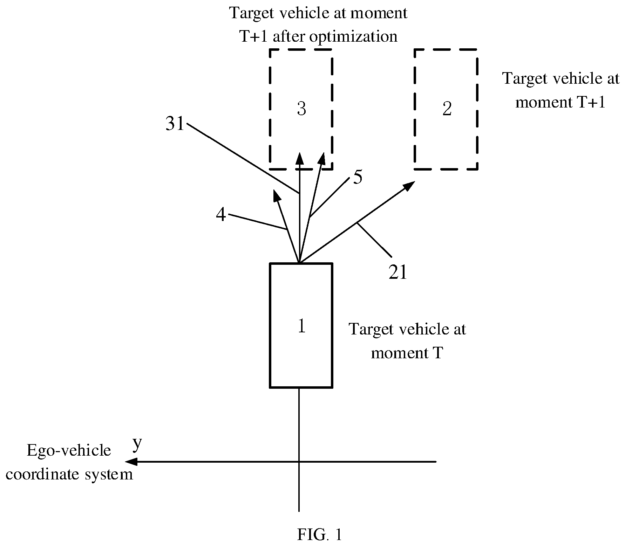

Please refer to FIG. 1, which is a schematic diagram of an application scenario of a target vehicle position correction method disclosed in an embodiment of the present application. As shown in FIG. 1, the technical concept of the present application is to provide an optimization method for a target vehicle position error in autonomous driving to achieve vehicle position optimization, and to achieve the purpose of optimizing a target position by optimizing the displacement at each moment, that is, the difference in position.

At moment T, a target vehicle position is correctly perceived, as shown in a solid-line box position 1.

At moment T+1, a target vehicle position is wrongly perceived, and a target vehicle moves along a measured displacement direction, that is, Arrow 21, to a dashed-line box position 2. In fact, the target vehicle should move along a real displacement direction, that is, Arrow 31, to a dashed-line box position 3.

At moment T+1, a heading of the target vehicle, that is, Arrow 4, is correctly perceived. Therefore, through the orientation and kinematic model formula optimization, the measured displacement direction (i.e., Arrow 21) can be optimized to a position of an optimized displacement direction (i.e., Arrow 5), reducing an error relative to a true displacement and optimizing the performance of an autonomous driving system.

Specifically, the present application constrains the position of the target vehicle through velocity information, heading information, and heading change information, thereby reducing errors.

The optimization premise of the present application is that, on the one hand, the heading information is an independent and relatively stable observation compared with the position information. In real situations, changes in heading slightly lag behind changes in displacement direction, and this lag can be ignored in most cases, allowing the displacement direction to be considered approximately the same as the heading direction. On the basis of high observation frequency, it can be assumed that an angular velocity between frames is constant, that is, the following constant curvature model described below.

### Constant curvature model:

During movement of an actual vehicle, most changes in the radius of motion curvature between frames are very small, because it is constrained by a wheelbase of a vehicle body. For example, the well-known Ackerman motion model and the bicycle model both describe this issue, and the existence of wheelbase makes it difficult for the motion curvature of the vehicle to change suddenly under the constraint.

An incorrect angle or velocity measurement usually contradicts these constraints or theoretical calculation values of the models. By taking advantage of this, the motion model can be used to constrain the optimization of the incorrect angle.

For the bicycle model and the Ackerman model, the wheelbase and front-wheel steering angle of the target vehicle need to be obtained in a calculation process. However, it is difficult to measure such information through sensors. Because of the high measurement frequency, the bicycle model may be simplified under the assumption that the front-wheel steering angle remains unchanged between two frames, and its simplified form is also consistent with the constant curvature model, thus obtaining a calculation method of a target heading angle.

The specific constraint method involves the calculation formula of the target heading angle, which can be found in the related description in embodiments, and will not be repeated here.

In addition, reference indicators of displacement also include actual heading, actual displacement and target heading angle. Combining these three aspects of information, a final position correction result can be obtained, that is, the position of the target vehicle is constrained by the velocity information, heading information and heading change information mentioned above. Specific details can be found in the relevant contents and selected formulas of Embodiment II.

### Embodiment I

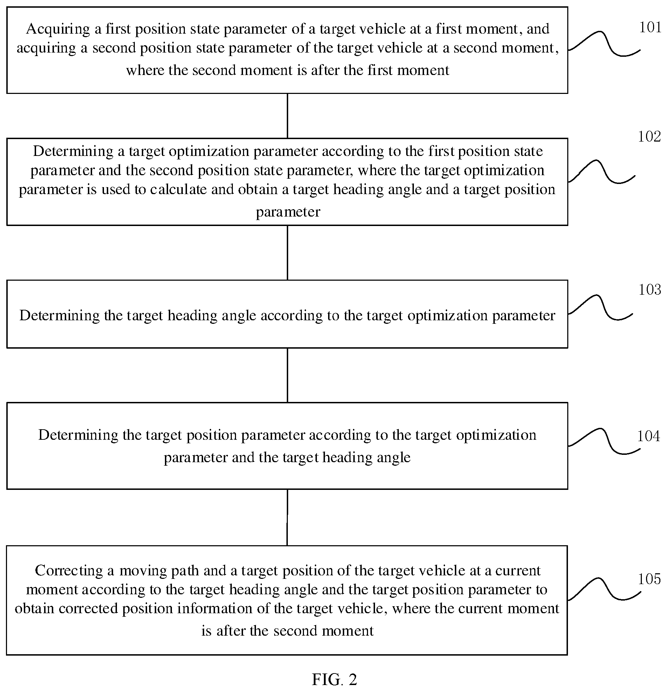

Please refer to FIG. 2, which is a schematic flowchart of a target vehicle position correction method disclosed in an embodiment of the present application. As shown in FIG. 2, the method includes the following steps.

S101: acquiring a first position state parameter of a target vehicle at a first moment, and acquiring a second position state parameter of the target vehicle at a second moment.

Where the second moment is after the first moment.

S102: determining a target optimization parameter according to the first position state parameter and the second position state parameter.

Where the target optimization parameter is used to calculate and obtain a target heading angle and a target position parameter.

S103: determining the target heading angle according to the target optimization parameter.

The target heading angle may be derived and obtained according to the aforementioned constant curvature model, and specific details can be found in Embodiment II. The target heading angle may be used to reflect heading change information, and the target optimization parameter may be used to reflect velocity information and heading information.

S104: determining the target position parameter according to the target optimization parameter and the target heading angle.

Therefore, the target position parameter that incorporates the velocity information, the heading information and the heading change information, can be obtained, so the target position parameter is constrained by these three factors.

S105: correcting a moving path and a target position of the target vehicle at a current moment according to the target heading angle and the target position parameter to obtain corrected position information of the target vehicle, where the current moment is after the second moment.

It should be understood that the first moment is a reference moment or a starting moment of acquiring various parameters as the basis for optimization, the second moment is a moment of triggering the optimization requirement, and the current moment is an ending moment of completing an optimization cycle, which may also be a starting moment of a next optimization cycle.

As an optional implementation, after correcting the moving path and the target position of the target vehicle at the current moment according to the target heading angle and the target position parameters to obtain the corrected position information of the target vehicle, the method further includes the following steps.
controlling the target vehicle to move to the target position indicated by the target heading angle and the target position parameter according to the target heading angle and the target position parameter;
updating a moment at which the target vehicle moves to the target position to the first moment, and triggering execution of the steps of acquiring the first position state parameter of the target vehicle at the first moment and acquiring the second position state parameter of the target vehicle at the second moment.

After determining the target heading angle and the target position parameter, the target vehicle should be driven to move to the position indicated by the target heading angle and the target position parameter, and a new round of cycle should be started for real-time position optimization.

Through the determined target heading angle and the target position parameter, a current timestamp is updated in real time after moving the target vehicle to the preset target position. A shifted moment is continuously taken as the first moment, and cyclic iteration steps for target vehicle position correction are triggered, thus realizing the real-time correction of the vehicle position and improving the real-time performance of vehicle position correction.

In the present embodiment, by acquiring position state parameters of the target vehicle at the first moment and the second moment, the target optimization parameter used for calculating the target heading angle and the target position parameter is determined, and the target heading angle and the target position parameter are further determined. The moving path and the target position of the target vehicle at the current moment can be corrected according to the target heading angle and the target position parameter to obtain the corrected position information of the target vehicle. In the process of target vehicle position correction, three types of information, namely the velocity information, the heading information and the heading change information, are applied, thereby improving the effectiveness and accuracy of target vehicle position correction. In addition, in the process of position correction, parameters outputted by the filter are only collected when acquiring the position state parameters, without interfering with internal parameters of the filter, which simplifies the calculation process and can also improve the real-time performance of vehicle position correction.

### Embodiment II

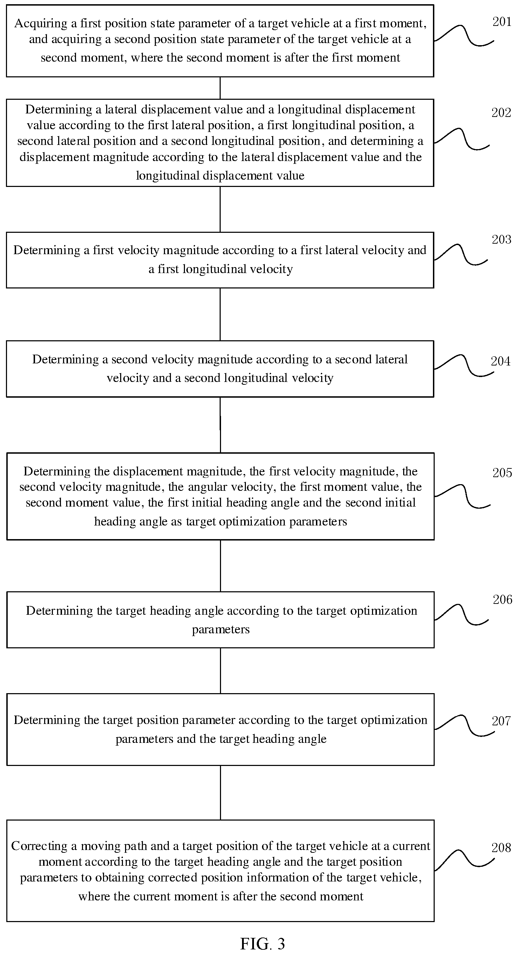

Please refer to FIG. 3, which is a schematic flowchart of another target vehicle position correction method disclosed in an embodiment of the present application. As shown in FIG. 3, the method includes the following steps.

S201: acquiring a first position state parameter of a target vehicle at a first moment, and acquiring a second position state parameter of the target vehicle at a second moment.

Where the second moment is after the first moment.

The first position state parameter includes a first lateral velocity, a first longitudinal velocity, a first initial heading angle, an angular velocity, a first moment value, a first lateral position and a first longitudinal position.

The second position state parameter includes a second lateral velocity, a second longitudinal velocity, a second initial heading angle, a second moment value, a second lateral position, and a second longitudinal position.

S202: determining a lateral displacement value and a longitudinal displacement value according to the first lateral position, the first longitudinal position, the second lateral position and the second longitudinal position, and determining a displacement magnitude according to the lateral displacement value and the longitudinal displacement value.

S203: determining a first velocity magnitude according to the first lateral velocity and the first longitudinal velocity.

S204: determining a second velocity magnitude according to the second lateral velocity and the second longitudinal velocity.

S205: determining the displacement magnitude, the first velocity magnitude, the second velocity magnitude, the angular velocity, the first moment value, the second moment value, the first initial heading angle and the second initial heading angle as target optimization parameters.

S206: determining a target heading angle according to the target optimization parameters.

S207: determining a target position parameter according to the target optimization parameters and the target heading angle.

S208: correcting a moving path and a target position of the target vehicle at a current moment according to the target heading angle and the target position parameters to obtaining corrected position information of the target vehicle, where the current moment is after the second moment.

It should be noted that for the related descriptions of step S201, step S206, step S207 and step S208, reference can be made to the corresponding descriptions in Embodiment I, which will not be repeated here.

It should be noted that the logic among step S202, step S203 and step S204 in the figure may be implemented in any combination, such as in parallel or in serial as shown in the figure, as long as it is ensured that all three steps are located after step S201 and before step S205.

As an optional implementation, determining the target heading angle according to the target optimization parameters includes:
calculating and obtaining the target heading angle according to the first velocity magnitude, the second velocity magnitude, the angular velocity, the first moment value, the second moment value and the first initial heading angle.

As an example, the target heading angle may be calculated and obtained by the following first formula: ${φ}_{p , n} = {v}_{n} / {v}_{n - 1} * {\dot{φ}}_{n} * \left({t}_{n}-{t}_{n - 1}\right) + {φ}_{n - 1}$

Where φ*_{p,n}* is the target heading angle, φₙ₋₁ is the first initial heading angle, φ̇*ₙ* is the angular velocity,vₙ is the second velocity magnitude, vₙ₋₁ is the first velocity magnitude, tₙ is the second moment value, and tₙ₋₁ is the first moment value.

The first formula is derived and obtained from the constant curvature model. Assuming that the angular velocity is constant, a current frame heading may be predicted according to information of a previous frame. The heading predicted by the constant curvature model can optimize errors caused by inaccurate measurement of some orientations and avoid optimizing the displacement to the wrong orientation, that is, a correction result is constrained by heading change information.

The target position parameter includes a target lateral position parameter and a target longitudinal position parameter, and determining the target position parameter according to the target optimization parameters and the target heading angle includes:
determining a first weight, a second weight and a third weight, where a sum of the first weight, the second weight and the third weight is a first value;

Typically, the first value may be 1. These three weight values may be designed according to characteristics of sensors, and these three weight values correspond to the position information, the velocity information and the heading change information. If the information acquisition effect for a certain type of information is more stable or a result is more accurate, a corresponding weight value may be increased.

A constrain optimization equation is determined according to the first weight, the second weight, the third weight, the displacement magnitude, the second initial heading angle and the target heading angle;

The target lateral position parameter and the target longitudinal position parameter are determined according to the constrain optimization equation.

As an example, the constrain optimization equation may be determined by the following second formula: $Δ {\hat{y}}_{n} = argmin Δ {\hat{y}}_{n} {w}_{o} ∗ \left‖Δ{\hat{y}}_{n}-Δy\right‖ + {w}_{h} ∗ \left‖Δ{\hat{y}}_{n}-{Δd}_{n}∗sin\left(φ\right)\right‖ + {w}_{p} ∗ \left‖\begin{matrix}Δ {\hat{y}}_{n} - {Δd}_{n} ∗ \\ sin \left({φ}_{p , n}\right)\end{matrix}\right‖$

An analytical solution of the second formula may be determined by the following third formula: $Δ {\hat{y}}_{n} = {w}_{o} * {Δy}_{n} + {w}_{h} * {Δd}_{n} * sin \left(φ\right) + {w}_{p} * {Δd}_{n} * sin \left({φ}_{p , n}\right)$

The constrained optimization equation is used to determine position information in a first direction, that is, the target lateral position parameter.

Where ∥ ∥ denotes the L2 norm, argmin**Δŷ*ₙ*** means to find **Δŷ*ₙ*** that minimizes the latter formula. That is, when a total difference between the target position parameter and information of these three aspects, i.e., the velocity information, the heading information, and the heading change information, is the smallest, the correction result may be considered as the most accurate result under the current parameter conditions.

Where **Δŷ*ₙ*** is the target lateral position parameter to be optimized; wₒ, Wₕ and wₚ denote the first weight, the second weight and the third weight, respectively; φ denotes the second initial heading angle, which is directly obtained by measuring at the second moment when the current optimization calculation is performed; φ*_{p,n}* denotes the target heading angle, which is obtained by calculating; Δd*ₙ* is the displacement magnitude, which may be projected in a heading angle direction.

Furthermore, position information in a second direction, that is, the target longitudinal position parameter, also follows similar expression forms. The lateral and the longitudinal directions are based on the coordinate system shown in FIG. 1. In different coordinate systems, the expression forms of the lateral or the longitudinal directions may vary slightly. It should be understood that, in this example, the related expressions of the second direction may be obtained by replacing all y with x and all sin with cos.

Through the above determined target optimization parameters, the target heading angle can be determined, and the target position parameter can be further obtained by calculating according to the determined target heading angle, so that the position correction is constrained by reference values of the three aspects, that is, the velocity information, the heading information and the heading change information, and then the target position parameter can be obtained according to the constrain optimization equation, therefore the accuracy of vehicle position determination can be improved.

As an optional implementation, the method further includes:
determining an attenuation coefficient;
correcting the target lateral position parameter and the target longitudinal position parameter according to the attenuation coefficient and the constrain optimization equation.

For an optimization result of each cycle, it is essentially an accumulation form regarding the displacement itself: ${x}_{n} = {x}_{0} + {\sum }_{k = 1}^{n} {Δx}_{k} = {x}_{n - 1} + {Δx}_{n}$ ${\hat{x}}_{n} = {x}_{0} + {\sum }_{k = 1}^{n} Δ {\hat{x}}_{k} = {\hat{x}}_{n - 1} + Δ {\hat{x}}_{n}$

That is, this set of formulas shows expressions of theoretical displacement and actual displacement obtained by accumulating the outputted results of each frame, or each optimization cycle.

By performing difference processing, an optimization value to be calculated for each cycle can be obtained: ${ϵ}_{n} = {\hat{x}}_{n} - {x}_{n} = {\sum }_{k = 1}^{n} \left(Δ{\hat{x}}_{k}-{Δx}_{k}\right) = {ϵ}_{n - 1} + \left(Δ{\hat{x}}_{n}-{Δx}_{n}\right)$

Thus, the corresponding target position parameter of each cycle can be obtained only by calculating the corresponding optimization value *εₙ* in each cycle: ${\hat{x}}_{n} = {x}_{n} + {ϵ}_{n}$

If this form is directly used for calculation, the possible problem is that a middle frame with wrong heading will lead to an error in optimal displacement calculation. At the same time, the subsequent optimization positions will always be affected by this error. Therefore, through design of the attenuation coefficient, a sum of optimized displacements is related to an optimization at the latest moment, and optimizations from earlier moments are attenuated over time, so that even if an optimization calculation at one moment is wrong, it will only affect the position optimization in a short time, that is, the following formula: ${ϵ}_{n} = {ϵ}_{n - 1} ∗ α + \left(Δ{\hat{x}}_{n}-{Δx}_{n}\right)$ ***α*** is the attenuation coefficient, which ranges between 0 and 1. The closer ***α*** is to 1, the less the previous displacement optimization affects the current attenuation. The closer ***α*** is to 0, the more the previous displacement optimization affects the current attenuation. The recommended value is 0.9.

By determining the position attenuation coefficient, the position attenuation coefficient is introduced into the constrain optimization equation for calculation, so that the historical correction results closer to the current moment play a more significant role in the process of correcting the target vehicle position, and the accuracy of vehicle position determination can be improved.

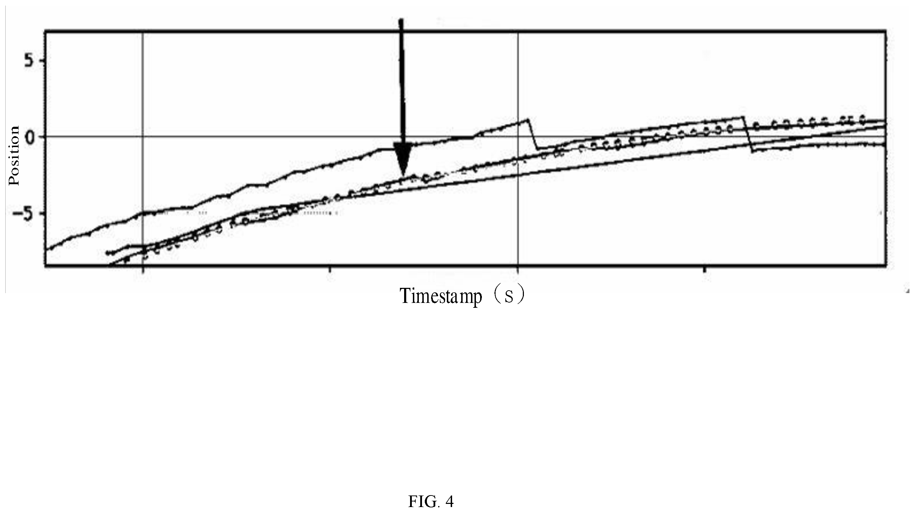

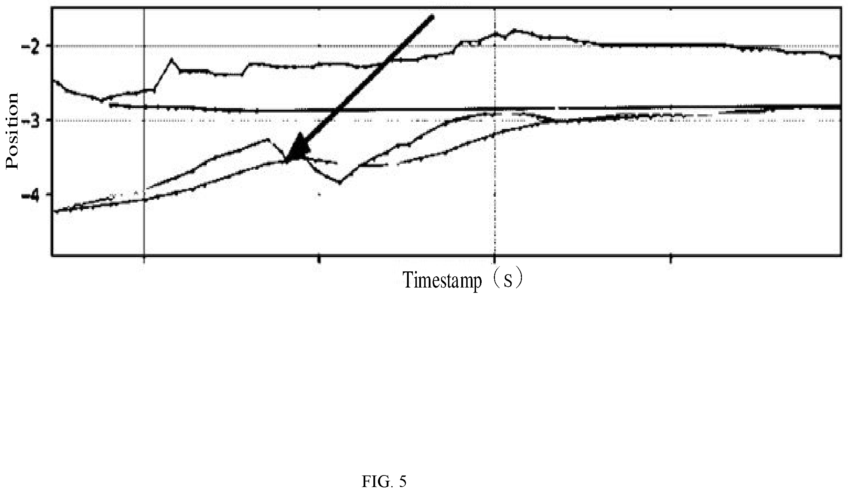

Please refer to FIG. 4 and FIG. 5, which are schematic diagrams of the effect of target vehicle position correction methods disclosed in embodiments of the present application.

As shown in FIG. 4, in an application scenario, the target vehicle is a vehicle traveling straight ahead, and the real lateral position is less than -3.6m at the moment indicated by the arrow, that is, outside the right lane line, meaning no lane departure occurred. The curve where the data point is located represents the filtered output of the sensor data. Because of the error of this measured value, the lateral position corresponding to the filtered curve also contains an error, which is far from the real value and the position is greater than -3.6m, which makes the target vehicle enter the wrong lane and causes a false braking event. As shown in FIG. 5, in this application scenario, the optimized curve is closer to the real value than the output filtered by the sensor, thus reducing erroneous actions and improving the accuracy of the target vehicle position correction.

By determining specific target optimization parameters, this embodiment can provide a basis for the calculation of target heading angle and target position parameters, so that the position correction is constrained by reference values of these three aspects, that is the velocity information, the heading information and the heading change information, and then the target position parameters can be obtained according to the constrained optimization equation, therefore the accuracy of vehicle position determination can be improved.

### Embodiment III

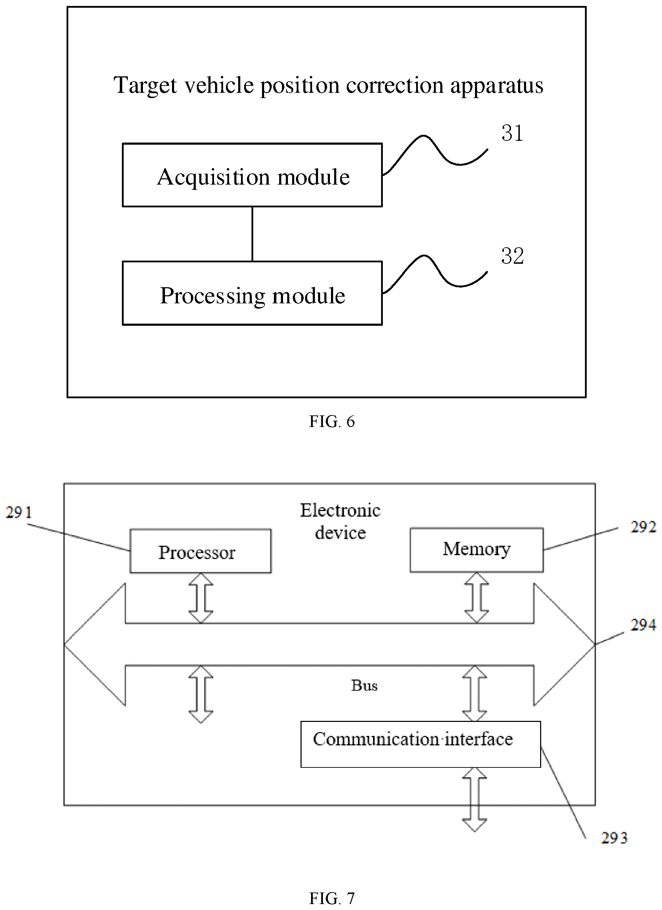

An embodiment of the present application further provides a target vehicle position correction apparatus to implement the above methods. Please refer to FIG. 6, which is a structural schematic diagram of a target vehicle position correction apparatus disclosed in an embodiment of the present application. As shown in FIG. 6, on the basis of any other embodiment, the apparatus includes:
an acquisition module 31, configured to acquire a first position state parameter of a target vehicle at a first moment, and acquiring a second position state parameter of the target vehicle at a second moment;
where the second moment is after the first moment;
a processing module 32, configured to determine a target optimization parameter according to the first position state parameter and the second position state parameter;
where the target optimization parameter is used to calculate and obtain a target heading angle and a target position parameter;
the processing module 32 is further configured to determine the target heading angle according to the target optimization parameter;
the processing module 32 is further configured to determine the target position parameter according to the target optimization parameter and the target heading angle;
the processing module 32 is further configured to correct a moving path and a target position of the target vehicle at a current moment according to the target heading angle and the target position parameter to obtain corrected position information of the target vehicle; where the current moment is after the second moment.

By acquiring position state parameters of the target vehicle at the first moment and the second moment, the target optimization parameter used for calculating the target heading angle and the target position parameter is determined, and the target heading angle and the target position parameter are further determined. The moving path and the target position of the target vehicle at the current moment can be corrected according to the target heading angle and the target position parameter to obtain the corrected position information of the target vehicle. In the process of target vehicle position correction, three types of information, namely the velocity information, the heading information and the heading change information, are applied, thereby improving the effectiveness and accuracy of target vehicle position correction. In addition, in the process of position correction, parameters outputted by the filter are only collected when acquiring the position state parameters, without interfering with internal parameters of the filter, which simplifies the calculation process and can also improve the real-time performance of vehicle position correction.

As an optional implementation, the processing module 32 is further configured to, after correcting the moving path and the target position of the target vehicle at the current moment according to the target heading angle and the target position parameter to obtain the corrected position information of the target vehicle, control the target vehicle to move to the target position indicated by the corrected position information of the target vehicle according to the corrected position information of the target vehicle;
update a moment at which the target vehicle moves to the target position to the first moment, and trigger execution of the steps of acquiring the first position state parameter of the target vehicle at the first moment and acquiring the second position state parameter of the target vehicle at the second moment.

Through the determined target heading angle and target position parameter, a current timestamp is updated in real time after moving the target vehicle to the preset target position. A shifted moment is continuously taken as the first moment, and cyclic iteration steps for the target vehicle position correction are triggered, thus realizing the real-time correction of the vehicle position and improving the real-time performance of vehicle position correction.

As an optional implementation, the first position state parameter includes a first lateral velocity, a first longitudinal velocity, a first initial heading angle, an angular velocity, a first moment value, a first lateral position and a first longitudinal position.

The second position state parameter includes a second lateral velocity, a second longitudinal velocity, a second initial heading angle, a second moment value, a second lateral position and a second longitudinal position.

The processing module 32 is further configured to determine a lateral displacement value and a longitudinal displacement value according to the first lateral position, the first longitudinal position, the second lateral position and the second longitudinal position, and determine a displacement magnitude according to the lateral displacement value and the longitudinal displacement value;
determine a first velocity magnitude according to the first lateral velocity and the first longitudinal velocity;
determine a second velocity magnitude according to the second lateral velocity and the second longitudinal velocity;
determine the displacement magnitude, the first velocity magnitude, the second velocity magnitude, the angular velocity, the first moment value, the second moment value, the first initial heading angle and the second initial heading angle as target optimization parameters.

By determining specific target optimization parameters, a basis can be provided for calculating the target heading angle and the target position parameter, so that the position correction is constrained by reference values of these three aspects, that is, the velocity information, the heading information and the heading change information, and then the target position parameter can be obtained according to the constrained optimization equation, therefore the accuracy of vehicle position determination can be improved.

As an optional implementation, the processing module 32 is further configured to: calculate and obtain the target heading angle according to the first velocity magnitude, the second velocity magnitude, the angular velocity, the first moment value, the second moment value and the first initial heading angle.

Moreover, the target position parameter includes a target lateral position parameter and a target longitudinal position parameter, and the processing module 32 is further configured to:
determine a first weight, a second weight and a third weight, where a sum of the first weight, the second weight and the third weight is a first value;
determine a constrain optimization equation according to the first weight, the second weight, the third weight, the displacement magnitude, the second initial heading angle and the target heading angle;
determine the target lateral position parameter and the target longitudinal position parameter according to the constrain optimization equation.

Through the above determined target optimization parameters, the target heading angle can be determined, and the target position parameter can be further obtained by calculating according to the determined target heading angle, so that the position correction is constrained by reference values of these three aspects, that is, the velocity information, the heading information and the heading change information, and then the target position parameter can be obtained according to the constrained optimization equation, therefore the accuracy of vehicle position determination can be improved.

As an optional implementation, the processing module 32 is further configured to:
determine an attenuation coefficient;
correct the target lateral position parameter and the target longitudinal position parameter according to the attenuation coefficient and the constrain optimization equation.

By determining the position attenuation coefficient, the position attenuation coefficient is introduced into the constrain optimization equation for calculation, so that the historical correction results closer to the current moment play a more significant role in the target vehicle position correction, and the accuracy of vehicle position determination can be improved.

### Embodiment IV

The present application provides an electronic device, including:
at least one processor; and
a memory communicatively connected to the at least one processor;
where the memory stores instructions executable by the at least one processor, and the instructions are executed by the at least one processor to enable the at least one processor to perform the method according to any one of the implementations.

The present application provides a computer-readable storage medium, where the computer-readable storage medium stores computer-executable instructions, and the computer-executable instructions, when executed by a processor, are used to implement the method according to any one of the implementations.

Specifically, please refer to FIG. 7, which is a structural schematic diagram of an electronic device disclosed in an embodiment of the present application. As shown in FIG. 7, the electronic device may include:
a processor (Processor) 291, and the apparatus further includes a memory (Memory) 292 storing executable program codes; a communication interface (Communication Interface) 293 and a bus 294 may also be included. The processor 291, the memory 292 and the communication interface 293 may communicate with each other through the bus 294. The communication interface 293 may be used for information transmission. The processor 291 is coupled to the memory 292, and the processor 291 may call logic instructions (executable program codes) in the memory 292 to execute the method according to any one of the above embodiments.

In addition, the logic instructions in the above-mentioned memory 292 may be implemented in the form of software functional units and may be stored in a computer-readable storage medium when sold or used as an independent product.

As a computer-readable storage medium, the memory 292 may be configured to store a software program, a computer-executable program, such as program instructions/modules corresponding to the methods in embodiments of the present application. The processor 291 executes a functional application and data processing by running the software program, instructions and the modules stored in the memory 292, that is, the methods in the above method embodiments are implemented.

The memory 292 may include a storage program area and a storage data area, where the storage program area may store an operating system, an application program required by at least one function; the storage data area may store data created according to the use of a terminal device, etc. In addition, the memory 292 may include a high-speed random-access memory and may also include a non-volatile memory.

An embodiment of the present application further provides a computer-readable storage medium, computer-executable instructions are stored in the computer-readable storage medium, and the computer-executable instructions, when called, are used for implementing the method in any one of the embodiments.

An embodiment of the present application further discloses a computer program product, the computer program product includes a non-transitory computer-readable storage medium storing a computer program, and the computer program is operable to cause a computer to perform the steps in the method described in any one of the embodiments.

An embodiment of the present application further provides a computer program, which, when run on a computer, causes the computer to execute the method steps as in the above-mentioned method embodiments, and the specific implementation manner and technical effect are similar, which will not be repeated here.

The apparatus embodiments described above are only schematic, in which the modules described as separate components may or may not be physically separated, and the components displayed as modules may or may not be physical modules, that is, they may be located in one place, or may be distributed to multiple network modules. Some or all of the modules may be selected according to actual needs to achieve the purpose of the embodiments. Those skilled in the art can understand and implement the embodiments without creative efforts.

Through the detailed description of the above embodiments, those skilled in the art can clearly understand that each implementation may be realized by means of software and necessary general hardware platform, and of course it may also be realized by hardware. Based on this understanding, the essence of the above technical solutions or the part that has contributed to the prior art may be embodied in the form of a software product. The software product may be stored in a computer-readable storage medium, and the storage medium includes a read-only memory (Read-Only Memory, ROM), a random access memory (Random Access Memory, RAM), a programmable read-only memory (Programmable Read-only Memory, PROM), an erasable programmable read only memory (Erasable Programmable Read Only Memory, EPROM), an one-time programmable read-only memory (One-time Programmable Read-Only Memory, OTPROM), an electrically-erasable programmable read-only memory (Electrically-Erasable Programmable Read-Only Memory, EEPROM), a compact disc read-only memory (Compact Disc Read-Only Memory, CD-ROM) or other optical disc storage, magnetic disk storage, magnetic tape storage, or any other computer-readable medium that can be configured to carry or store data.

Those skilled in the art can understand that all or part of the steps in the above methods may be completed by a program instructing a related hardware (such as a processor), and the program may be stored in a computer-readable storage medium, such as a read-only memory, a magnetic disk or an optical disk. Optionally, all or part of the steps of the above embodiments may also be implemented by using one or more integrated circuits. Accordingly, each module/unit in the above embodiments may be implemented in the form of hardware, for example, by an integrated circuit, or in the form of a software function module, for example, by a processor executing programs/instructions stored in a memory to achieve its corresponding function. The present application is not limited to any specific combination of hardware and software.

Other embodiments of the present application will easily occur to those skilled in the art after considering the specification and practicing the invention disclosed herein. The present application is intended to cover any variations, usages or adaptive changes of the present application, and the variations, usages or adaptive changes follow the general principles of the present application and include common knowledge or conventional technical means in this technical field which are not disclosed in the present application. The specification and embodiments are to be regarded as exemplary only, with the true scope and spirit of the present application being indicated by the following claims.

It should be understood that the present application is not limited to the precise structures described above and shown in the accompanying drawings, and various modifications and changes may be made without departing from its scope. The scope of the present application is limited only by the appended claims.

## Claims

1. A method for target vehicle position correction, comprising:
acquiring a first position state parameter of a target vehicle at a first moment, and acquiring a second position state parameter of the target vehicle at a second moment, wherein the second moment is after the first moment;
determining a target optimization parameter according to the first position state parameter and the second position state parameter, wherein the target optimization parameter is used to calculate and obtain a target heading angle and a target position parameter;
determining the target heading angle according to the target optimization parameter;
determining the target position parameter according to the target optimization parameter and the target heading angle;
correcting a moving path and a target position of the target vehicle at a current moment according to the target heading angle and the target position parameter to obtain corrected position information of the target vehicle, wherein the current moment is after the second moment.

2. The method according to claim 1, wherein after correcting the moving path and the target position of the target vehicle at the current moment according to the target heading angle and the target position parameter to obtain the corrected position information of the target vehicle, the method further comprises:
controlling the target vehicle to move to the target position indicated by the corrected position information of the target vehicle according to the corrected position information of the target vehicle;
updating a moment at which the target vehicle moves to the target position to the first moment, and triggering execution of the steps of acquiring the first position state parameter of the target vehicle at the first moment and acquiring the second position state parameter of the target vehicle at the second moment.

3. The method according to claim 1, wherein the first position state parameter comprises a first lateral velocity, a first longitudinal velocity, a first initial heading angle, an angular velocity, a first moment value, a first lateral position and a first longitudinal position;
the second position state parameter comprises a second lateral velocity, a second longitudinal velocity, a second initial heading angle, a second moment value, a second lateral position and a second longitudinal position;
wherein determining the target optimization parameter according to the first position state parameter and the second position state parameter comprises:
determining a lateral displacement value and a longitudinal displacement value according to the first lateral position, the first longitudinal position, the second lateral position and the second longitudinal position, and determining a displacement magnitude according to the lateral displacement value and the longitudinal displacement value;
determining a first velocity magnitude according to the first lateral velocity and the first longitudinal velocity;
determining a second velocity magnitude according to the second lateral velocity and the second longitudinal velocity;
determining the displacement magnitude, the first velocity magnitude, the second velocity magnitude, the angular velocity, the first moment value, the second moment value, the first initial heading angle and the second initial heading angle as the target optimization parameter.

4. The method according to claim 3, wherein determining the target heading angle according to the target optimization parameter comprises:
calculating and obtaining the target heading angle according to the first velocity magnitude, the second velocity magnitude, the angular velocity, the first moment value, the second moment value and the first initial heading angle;
wherein the target position parameter comprises a target lateral position parameter and a target longitudinal position parameter, and determining the target position parameter according to the target optimization parameter and the target heading angle comprises:
determining a first weight, a second weight and a third weight, wherein a sum of the first weight, the second weight and the third weight is a first value;
determining a constrain optimization equation according to the first weight, the second weight, the third weight, the displacement magnitude, the second initial heading angle and the target heading angle;
determining the target lateral position parameter and the target longitudinal position parameter according to the constrain optimization equation.

5. The method according to claim 4, further comprising:
determining an attenuation coefficient;
correcting the target lateral position parameter and the target longitudinal position parameter according to the attenuation coefficient and the constrain optimization equation.

6. An apparatus for target vehicle position correction, comprising:
an acquisition module, configured to acquire a first position state parameter of a target vehicle at a first moment, and acquire a second position state parameter of the target vehicle at a second moment;
wherein the second moment is after the first moment;
a processing module, configured to determine a target optimization parameter according to the first position state parameter and the second position state parameter;
wherein the target optimization parameter is used to calculate and obtain a target heading angle and a target position parameter;
wherein the processing module is further configured to determine the target heading angle according to the target optimization parameter;
the processing module is further configured to determine the target position parameter according to the target optimization parameter and the target heading angle;
the processing module is further configured to correct a moving path and a target position of the target vehicle at a current moment according to the target heading angle and the target position parameter to obtain corrected position information of the target vehicle, wherein the current moment is after the second moment.

7. The apparatus according to claim 6, wherein the first position state parameter comprises a first lateral velocity, a first longitudinal velocity, a first initial heading angle, an angular velocity, a first moment value, a first lateral position and a first longitudinal position;
the second position state parameter comprises a second lateral velocity, a second longitudinal velocity, a second initial heading angle, a second moment value, a second lateral position and a second longitudinal position; and
wherein the processing module is further configured to:
determine a lateral displacement value and a longitudinal displacement value according to the first lateral position, the first longitudinal position, the second lateral position and the second longitudinal position, and determine a displacement magnitude according to the lateral displacement value and the longitudinal displacement value;
determine a first velocity magnitude according to the first lateral velocity and the first longitudinal velocity;
determine a second velocity magnitude according to the second lateral velocity and the second longitudinal velocity;
determine the displacement magnitude, the first velocity magnitude, the second velocity magnitude, the angular velocity, the first moment value, the second moment value, the first initial heading angle and the second initial heading angle as the target optimization parameter.

8. The apparatus according to claim 7, wherein the processing module is further configured to:
calculate and obtain the target heading angle according to the first velocity magnitude, the second velocity magnitude, the angular velocity, the first moment value, the second moment value and the first initial heading angle;
wherein the target position parameter comprises a target lateral position parameter and a target longitudinal position parameter, and the processing module is further configured to:
determine a first weight, a second weight and a third weight, wherein a sum of the first weight, the second weight and the third weight is a first value;
determine a constrain optimization equation according to the first weight, the second weight, the third weight, the displacement magnitude, the second initial heading angle and the target heading angle;
determine the target lateral position parameter and the target longitudinal position parameter according to the constrain optimization equation.

9. An electronic device comprising:
at least one processor; and
a memory communicatively connected to the at least one processor;
wherein the memory stores instructions executable by the at least one processor, and the instructions are executed by the at least one processor to enable the at least one processor to perform the method according to any one of claims 1-5.

10. A computer-readable storage medium, wherein computer-executable instructions are stored in the computer-readable storage medium, and the computer-executable instructions, when executed by a processor, are used to implement the method according to any one of claims 1-5.

11. A computer program product, comprising a computer program, wherein when the computer program is executed, the method according to any one of claims 1-5 is implemented.

12. A computer program, wherein when the computer program runs on a computer, the computer performs the method according to any one of claims 1-5.
